# EUROPEAN PATENT SPECIFICATION

(11) **EP 2 625 469 B1**
(45) Date of publication and mention of the grant of the patent: **27.01.2016**
(21) Application number: 11776486.0
(22) Date of filing: 04.10.2011
(51) Int. Cl.: F24H 8/00

(54) **CONDENSING HEAT EXCHANGER HAVING A PRIMARY AND A SECONDARY HEAT EXCHANGER**
KONDENSATIONSWÄRMETAUSCHER MIT EINEM ERSTEN UND EINEM ZWEITEN WÄRMETAUSCHER
ÉCHANGEUR DE CHALEUR À CONDENSATION COMPRENANT UN ECHANGEUR DE CHALEUR PRIMAIRE ET SECONDAIRE

(30) Priority: 04.10.2010 GB 201016673
(43) Date of publication of application: 14.08.2013
(73) Proprietor: Johnson&Starley Limited, Northampton, Northamptonshire NN4 7LZ (GB)
(72) Inventor: WILLIAMS, Ian, Northampton Northamptonshire NN4 7LZ (GB); PAGE, Glenn, NorthamptonNorthamptonshire NN4 7LZ (GB); COOPER, Tim, Northampton Northamptonshire NN4 7LZ (GB); WORTHING, Ken, Northampton Northamptonshire NN4 7LZ (GB); DEE, Tom, Northampton Northamptonshire NN4 7LZ (GB)
(74) Representative: McWilliams, David John
(86) International application number: PCT/GB2011/051881
(87) International publication number: WO 2012/046038

(56) References cited:
- EP-A1- 1 801 407
- EP-A2- 1 972 864
- EP-A2- 1 978 323
- DE-A1- 19 743 586
- DE-C2- 3 238 603
- GB-A- 2 453 128
- US-A- 4 531 577
- US-A- 4 860 725
- US-A- 4 960 102
- US-A- 5 282 457
- US-A- 5 881 681
- US-A1- 2005 092 316
- US-A1- 2009 223 655

## Description

This disclosure relates to a heat exchanger, more particularly a condensing type heat exchanger. The disclosure also relates to a method of assembling a heat exchanger, more particularly a condensing type heat exchanger.

A known fuel-fired forced air heat exchanger is set forth in US4960102, which is considered as the closest prior art. The heat exchanger includes a primary heat exchanger and a secondary heat exchanger connected downstream of and in series with the primary heat exchanger. Advantageously, the secondary heat exchanger is arranged to condense the combustion gases discharged from the primary heat exchanger, and so capture latent heat from the available combustion gas. Such heat exchangers are commonly referred to as "condensing" heat exchangers.

The increasing cost of fuel and materials means that there is a need to improve the heating efficiency and assembly of such heat exchangers.

According to one aspect of the invention, there is provided a condensing heat exchanger according to claim 1.

In exemplary embodiments, the tubes are provided in an array adjacent, e.g. to the side of, the drum.

In exemplary embodiments, the spiral thread begins at a predetermined distance from one end of the tube and stops at a predetermined distance from the opposite end of the tube, so that the ends of the tube are plain.

In exemplary embodiments, the tubes have a small diameter relative to the diameter of the drum.

In exemplary embodiments, the tubes have a diameter in the range 4mm to 8mm. In another embodiment the tubes have a diameter in the range 5mm to 7mm. In a further embodiment the tubes have a diameter of 6mm.

In exemplary embodiments, the tubes are arranged in staggered rows.

In exemplary embodiments, the tubes are provided between inlet and outlet plates, as a subassembly.

In exemplary embodiments, the inlet and/or outlet plates are preformed with tube apertures for receiving the ends of the tubes in a pre-defined array.

In exemplary embodiments, the tube apertures have a peripheral flange projecting from the associated plate to provide a sleeve for a section of the tubes.

In exemplary embodiments, the primary heat exchanger consists of a subassembly including a cylindrical drum sealingly attached to an outlet plate; wherein the secondary heat exchanger consists of a subassembly including said plurality of tubes sealing attached to an inlet plate; and wherein the two subassemblies are united with one another by attachment between the outlet plate and inlet plate.

In exemplary embodiments, a closure is attached to the united subassemblies and defines a passageway for combustion gases from the primary heat exchanger to the secondary heat exchanger.

In exemplary embodiments, an array of concentric circles pressed into a surface of the closure to reduce noise during flexure of the closure under thermal expansion.

In exemplary embodiments, the closure is of box-type configuration having four side walls and a base wall, wherein the base wall is pressed outwards, to extend beyond the side walls, and defines four generally triangular sloping surfaces.

According to another aspect of the invention, there is provided a method of assembling a condensing heat exchanger according to claim 9

In exemplary embodiments, the method includes the step of providing an inlet plate and an outlet plate for the tubes, the inlet and outlet plates being pre-formed with tube apertures for receiving the ends of the tubes in a pre-defined array, arranging the plates in a spaced array with said tubes arranged between the plates with the tubes in alignment with the tube apertures, and driving the plates together in the direction of one another to force the ends of the tubes into the respective tube apertures.

In exemplary embodiments, each tube aperture is provided with a peripheral flange projecting from the associated plate to provide a sleeve for a section of a respective tube.

In exemplary embodiments, the peripheral flange is swaged to fixedly couple the flange to the tubes.

In exemplary embodiments, a spiral thread is formed in the outer surface of each tube prior to incorporation in the assembly.

In exemplary embodiments, each tube is drawn and then the spiral thread is formed on the drawn tube, prior to a second drawing operation, to remove any significant deformations generated when the thread is formed.

In exemplary embodiments, the primary heat exchanger is formed as a subassembly including a cylindrical drum sealingly attached to an outlet plate; the secondary heat exchanger is formed as a separate subassembly including said plurality of tubes sealing attached to an inlet plate; and the two subassemblies are united with one another by attachment between the outlet plate and inlet plate.

In exemplary embodiments, a closure is attached to the united subassemblies to define a passageway for combustion gases from the primary heat exchanger to the secondary heat exchanger.

In exemplary embodiments, an array of concentric circles pressed into a surface of the closure to reduce noise during flexure of the closure under thermal expansion.

In exemplary embodiments, the closure is of pre-formed box-type configuration having four side walls and a base wall, wherein the base wall is pressed outwards, to extend beyond the side walls, and defines four generally triangular sloping surfaces. Other aspects and features of the invention will be apparent from the attached claims and the following description of preferred embodiments, made by way of example only, with reference to the accompanying drawings, in which:
Figure 1 is a schematic perspective view of an outlet plate for a secondary heat exchanger;
Figure 2 is an enlarged view of encircled region A from Figure 1;
Figure 3 is a schematic perspective view of an inlet plate for a secondary heat exchanger;
Figure 4 is an enlarged view of encircled region B from Figure 3;
Figure 5 is a schematic perspective view of a secondary heat exchanger subassembly incorporating the inlet and outlet plates of Figures 1 and 3;
Figure 6A is schematic side view of a heat exchanger tube for use in the subassembly of Figure 5;
Figure 6B is an enlarged view of encircled region C from Figure 6A;
Figure 6C is schematic cross-section through the heat exchanger tube of Figure 6A;
Figure 7 is a schematic perspective view of a primary heat exchanger subassembly;
Figure 8 is a schematic perspective view showing the pre-assembly formed when the subassembly of Figure 5 is united with the subassembly of Figure 7;
Figure 9 is a schematic perspective view of the pre-assembly of Figure 8 prior to attachment of a cover element to provide a passageway between the primary heat exchanger and the secondary heat exchanger;
Figure 10A is schematic side view of the closure from Figure 9; and
Figure 10B is cross-sectional view of the closure from Figure 10A taken along line D-D.

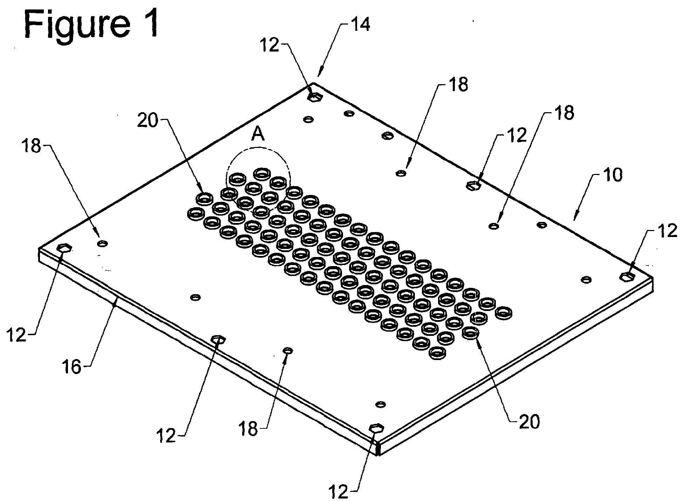

Referring firstly to Figure 1, there is shown a plate 10 of rectangular form. The plate includes an array of primary fixing apertures 12 arranged about the periphery of the plate 10, e.g. one at each corner 14 of the plate 10 and one positioned mid way along each of the two longest sides 16 of the plate 10. The plate 10 also includes a plurality of secondary fixing apertures 18 arranged in two rows, each row being spaced inwardly of the primary fixing apertures 12 and extending in a direction parallel with the respective longest sides 16 of the plate 10.

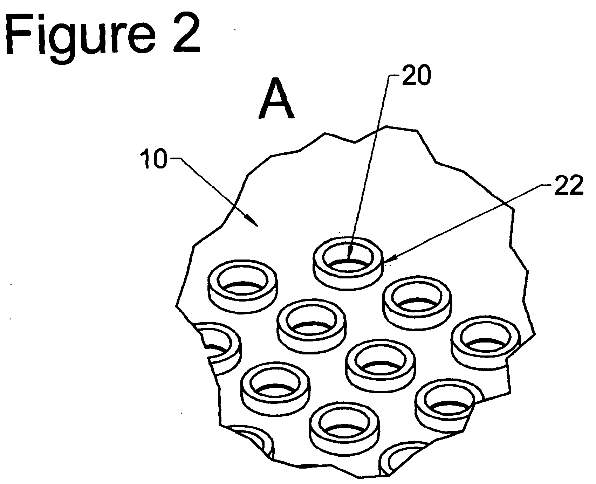

The plate 10 further includes an array of tube apertures 20 arranged centrally on the plate 10 in a plurality of rows extending in a direction parallel with line the longest sides 16 of the plate 10. Adjacent rows in the array of tube apertures 20 are staggered relative to one another, e.g. so that the apertures do not align in a transverse direction relative to the longest sides of the plate. The tube apertures 20 are formed by a punching operation and so define a peripheral flange 22 which projects upwardly from the upper surface 24 of the plate 10, as viewed in Figure 1 (and as seen most clearly in Figure 2).

Plate 10 is preformed to the configuration shown in Figure 1, ready for use as an outlet plate 10 for a secondary heat exchanger assembly according to an exemplary embodiment of the invention. As can be seen, the edges 26 of the plate 10 are turned to project downwardly as viewed in Figure 1, to form an open box type structure (as would be apparent if viewed from below in Figure 1).

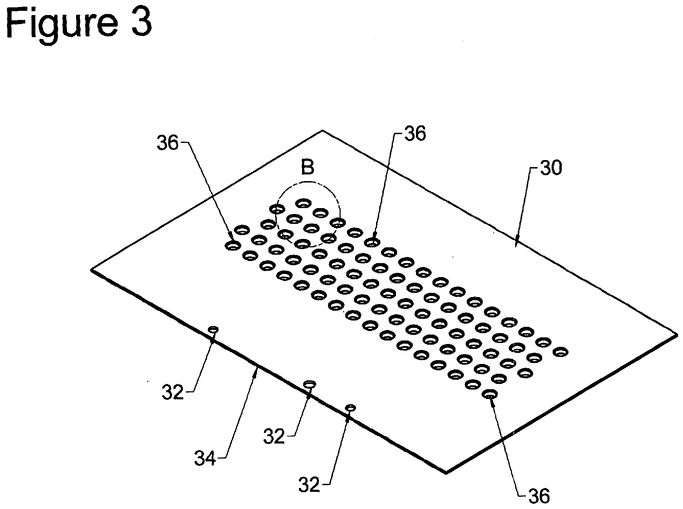

Referring now to Figure 3 there is a shown a plate 30 of rectangular form, and including three fixing apertures 32 arranged at predetermined locations along one of the longer sides 34 of the plate 30.

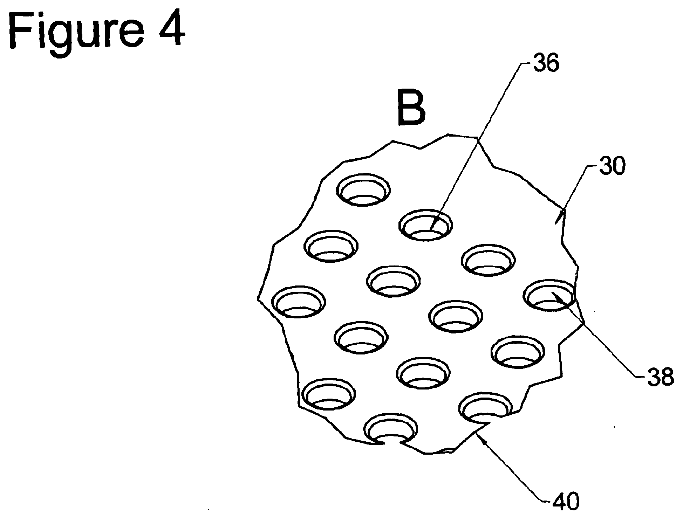

Plate 30 also includes an array of tube apertures 36 arranged centrally on the plate 30 in a plurality of rows extending parallel with the longest sides 34 of the plate 10. Again, adjacent rows in the array of tube apertures 36 are staggered relative to one another. The tube apertures 36 are formed by a punching operation and so define a peripheral flange 38 which projects downwardly from the lower surface 40 of the plate 30, as viewed in Figure 3 (and as seen most clearly in Figure 4).

Plate 30 is pre-formed to the configuration shown in Figure 3, ready for use as an inlet plate 30 for a secondary heat exchanger according to an exemplary embodiment of the invention.

Unlike the plate 10 in Figure 1, plate 30 does not include turned edges. However, the position of the tube apertures 36 on the plate 30 matches the position of the tube apertures 20 on plate 10.

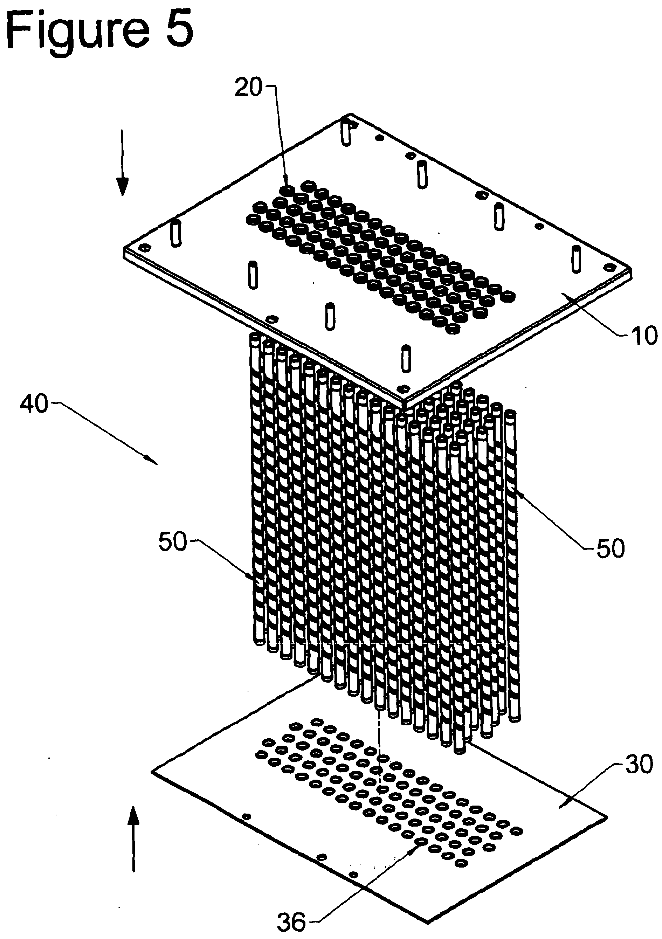

According to an exemplary method of assembly, the two plates 10 and 30 are arranged in a spaced array with a plurality of stainless steel heat exchanger tubes 50 arranged therebetween, e.g. as shown in Figure 5. The plates 10 and 30 and tubes 50 are arranged with the tubes 50 in alignment with the tube apertures 20, 36, e.g. using a special purpose assembly machine. The plates 10 and 30 are then moved in the direction of one another, to force the ends of the tubes 50 into the respective tube apertures 20, 36. The diameter of the tube apertures 20, 36 is selected to create an interference fit between the associated flanges 22, 38 and the respective ends of the tubes 50. In an exemplary method of assembly, a swaging tool (not shown) may be used to swage the ends of the tubes 50 in the flanges 22, 38 to securely couple the tubes 50 to the inlet/outlet plates 12, 30. The two ends may be swaged simultaneously, to reduce process time.

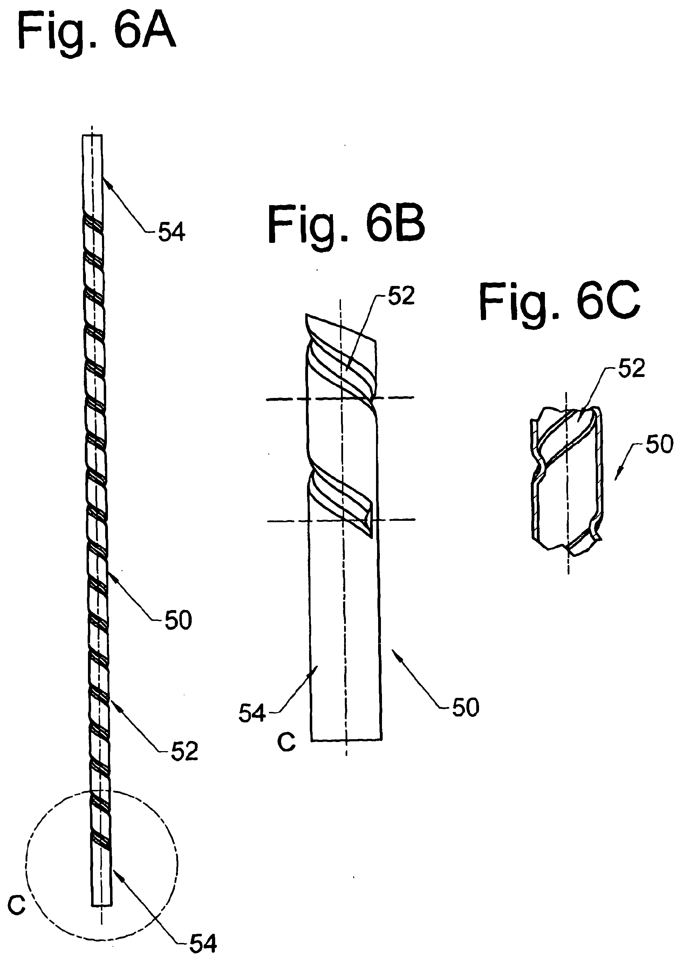

An example of a heat exchanger tube 50 for use in the secondary heat exchanger assembly and method of assembly described above is shown in Figure 6. The tube 50 is of seamless drawn construction, having a predefined outer diameter (for providing on an interference fit with the flanges 22, 38 on the plates 10, 30) and a predefined internal diameter. In exemplary embodiments, the tubes 50 are of small diameter. Test results have shown a 6mm diameter bore to provide beneficial performance characteristics. In exemplary embodiments, the diameter of the tubes is within the range 4mm to 8mm.

A spiral thread 52 is provided as a recessed formation in the outer surface of the tube 50. The configuration of the thread 52 (in terms of pitch and depth relative to the length of the tube) is configured to promote the flow of combustion gases though the tube 50, in use.

Test results show that a pitch of the spiral formation in the region of 6-12mm (e.g.12mm), at a depth of 0.69-0.7mm, with a wall thickness of 0.5±0.03mm provides optimum strength and heat transfer characteristics for exemplary embodiments.

In exemplary embodiments, the tube 50 is drawn and then the spiral thread 52 is formed on the drawn tube 50. A second drawing operation is then carried out to remove any significant deformations generated when the thread is formed, so as to maintain the accuracy of the tube diameter axial alignment, to promote optimum performance and avoid condensate being trapped within the tube.

The spiral thread 52 does not extend to the ends 54 of the tube 50; the thread 52 begins at a predetermined distance from one end 54 of the tube 50 and stops at a predetermined distance before the opposite end 54 of the tube 50, so that the ends 54 of the tube are plain, to ensure a tight fit with the tube apertures 20, 36 on the plates 10,30.

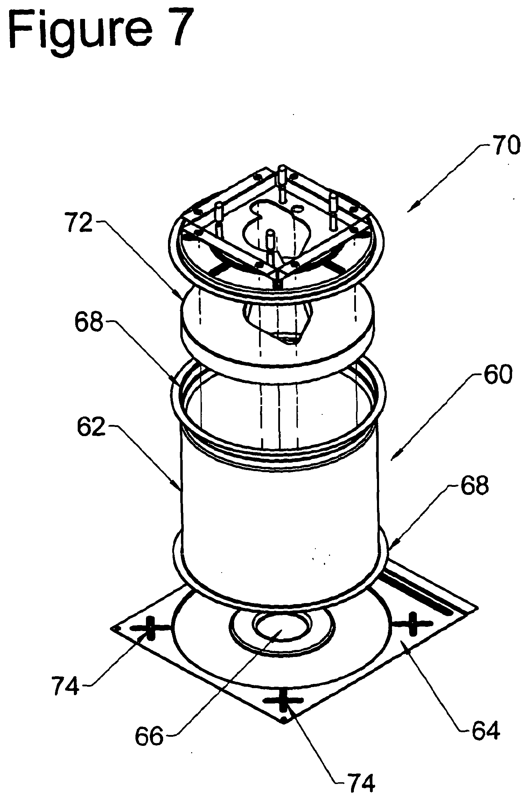

A primary heat exchanger assembly 60 according to an exemplary embodiment of the invention will now be described with reference to Figure 7.

The primary heat exchanger assembly 60 has a cylindrical drum 62 of pre-selected diameter. An outlet plate 64 having a central outlet aperture 66 is fitted to the lower end of the drum 62, as viewed in Figure 7, and affixed thereto (e.g. by seam welding to a peripheral flange 68) to form an airtight seal with the drum 62.

An inlet assembly 70 is fitted to the upper end of the drum 62, with a thermal insulation plate 72 fixed in place beneath the inlet assembly 70. The inlet assembly 70 affixed to the drum (e.g. by seam welding to a peripheral flange 68) to form an airtight seal with the drum 62.

X-type strengthening formations 74 are formed adjacent each of the corners 76 of the outlet plate 64. These serve as strengthening braces and also allow the material to move during the expansion and contraction cycles. Allowing the material to move eliminates noise issues which would otherwise result, such as 'bonging' and 'ticking', due to the different expansion rates of the mating materials.

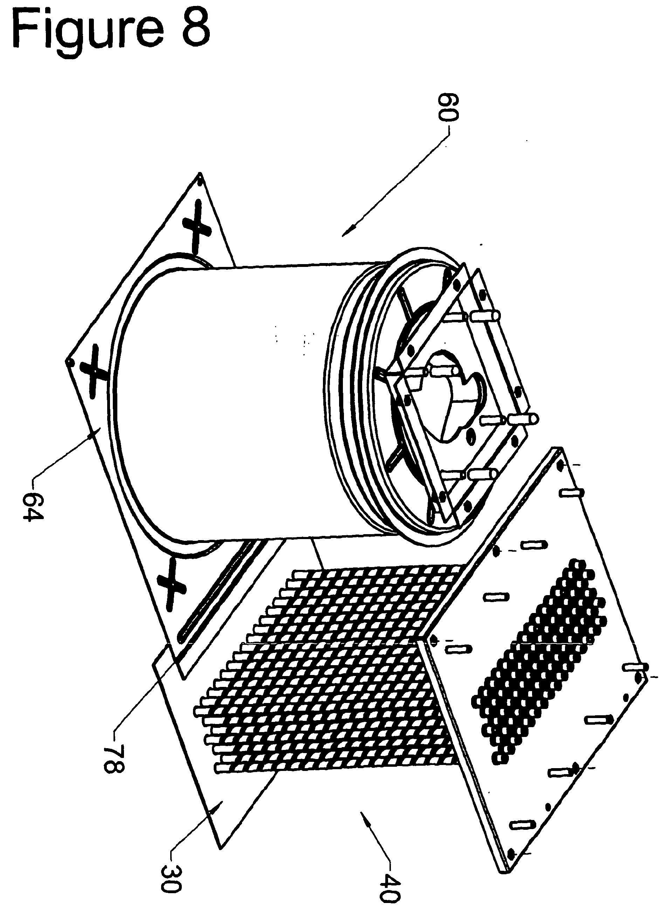

Referring now to Figure 8, it can be seen that the primary and secondary heat exchanger assemblies 60, 40 form separate sub assemblies of a condensing heat exchanger according to an exemplary embodiment of the invention. The two sub assemblies 60, 40 are then brought together (e.g. using a mechanical jig) and attached to one another. In the illustrated embodiment, the two assemblies 60, 40 are affixed to one another by a seam weld 78 formed between respective edges regions of the outlet plate 64 of the primary heat exchanger assembly 60 and the inlet plate 30 of the secondary heat exchanger assembly 40.

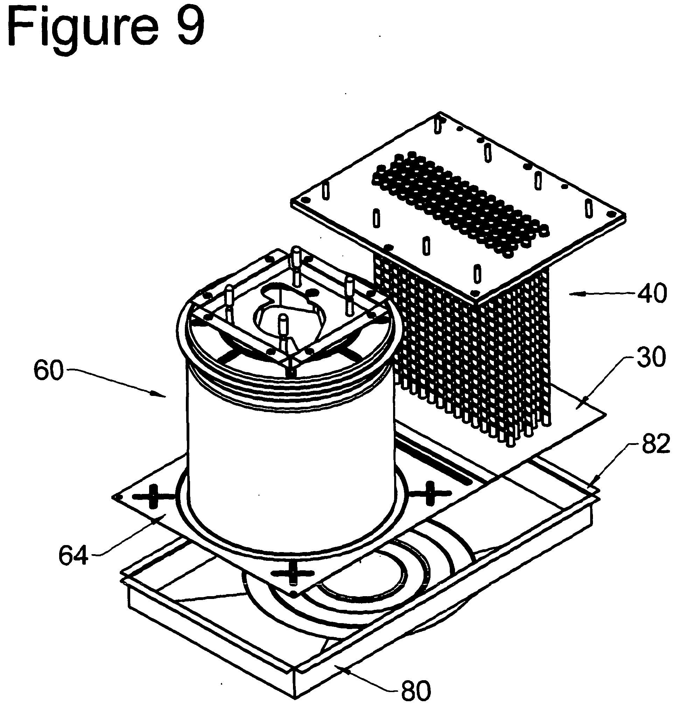

As can be seen from Figure 9, a box closure 80 is then be applied over the lower end of the united sub assemblies 40, 60. The box closure 80 includes a peripheral flange 82 and a seam weld is used to affix united plates 30, 64 to the peripheral flange 82, and create an airtight seal between the closure 80 and the united sub assemblies 40, 60.

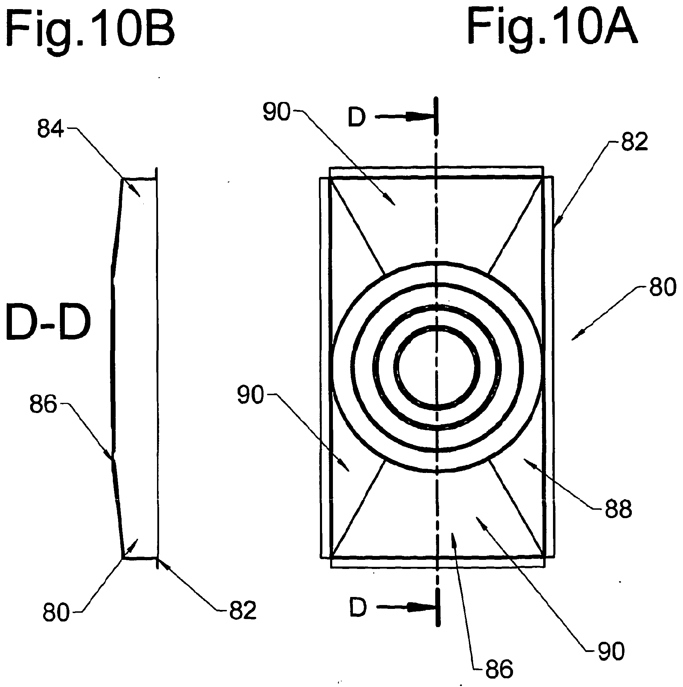

Figures 10A and 10B show a box closure 80 of exemplary configuration, having side walls 84 and a base wall 86. An array of concentric circles 88 is pressed into the base wall 86 (on the outer side of the box 80). The base wall 80 is then pressed outwards, to extend beyond the side walls 84 (e.g. as viewed in Figure 10B), and bent so as to define four generally triangular sloping surfaces 90. This configuration has been found to provide reduced noise from flexure of the material (e.g. bongs and ticks) and reduces the tendency for splitting, in use.

Once assembled, the finished assembly is ready for incorporation in a condensing heat exchanger, e.g. with a fuel burner (not shown) in communication with the inlet assembly 70 of the primary heat exchanger 60, so that combustion gasses pass through the drum 62, into the box closure 80 and out through the tubes 50 of the secondary heat exchanger 40.

The provision of an array of small diameter tubes as the secondary heat exchanger has been found to be particularly effective, especially when incorporating a spiral thread and/or when arranged in staggered rows. The arrangement of the tubes between the pre-formed inlet and outlet plates provides a convenient and efficient sub-assembly, which can be readily incorporated with the primary heat exchanger sub-assembly described herein.

## Claims

1. A condensing heat exchanger of the kind having a primary heat exchanger and a secondary heat exchanger connected downstream of and in series with the primary heat exchanger, in which the secondary heat exchanger is arranged to at least partially condense combustion gases discharged from the primary heat exchanger,
wherein the primary heat exchanger comprises a drum (62) having a longitudinal axis and the secondary heat exchanger comprises a plurality of small diameter, relative to the diameter of the drum drawn tubes (50) arranged by the side of the drum (62) and extending parallel with the longitudinal axis of the drum (62), **characterised in that** a spiral thread (52) is formed as a recessed formation in an outer surface of each drawn tube (50), for promoting flow of combustion gases along the tube (50).

2. A condensing heat exchanger according to claim 1 wherein the spiral thread (52) begins at a predetermined distance from one end (54) of the tube (50) and stops at a predetermined distance from the opposite end of the tube (50), so that the ends (54) of the tube (50) are plain, and/or wherein the diameter of the tubes (50) is in the range of approximately 4mm to 8mm, and/or wherein said tubes (50) define a tube array including first and second rows of said tubes (50), wherein said first and second rows are adjacent one another and are parallel, and wherein the position of the tubes (50) in the first row is offset from the position of the tubes (50) in the second row, so that the tubes (50) in the first row are staggered relative to the tubes (50) in the second row.

3. A condensing heat exchanger according to claim 1 or claim 2 wherein the tubes (50) are provided between inlet and outlet plates (10, 30), as a subassembly of the heat exchanger.

4. A condensing heat exchanger according to claim 3 wherein the inlet and/or outlet plate (10, 30) is preformed with tube apertures (36) for receiving the ends (54) of the tubes (50) in a pre-defined array.

5. A condensing heat exchanger according to claim 4 wherein each tube aperture (36) has a peripheral flange to provide a sleeve for receiving part of the length of a respective tube (50).

6. A condensing heat exchanger according to any of claims 1 to 5 wherein the primary heat exchanger comprises a subassembly (60) including the cylindrical drum (62) sealingly attached to an outlet plate (64); wherein the secondary heat exchanger comprises a subassembly (40) including said plurality of tubes (50) sealing attached to an inlet plate (30); and wherein the two subassemblies (60, 40) are united with one another by attachment between the outlet plate (64) and inlet plate (30).

7. A condensing heat exchanger according to claim 6, further including a closure (80) for connecting the two subassemblies (60, 40) and defining a passageway for combustion gases to be channelled from the primary heat exchanger to the secondary heat exchanger.

8. A condensing heat exchanger according to claim 7 wherein the closure (80) has a box-type configuration with four side walls (84) and a base wall (86), wherein the base wall (86) has a pressed configuration in which an outer surface of the base wall (86) extends outwardly (e.g. in a direction generally away from the two subassemblies), for reducing noise during flexure of the closure (80) under thermal expansion and further including an array of concentric circles (88) press-formed into a major surface of the closure (80) (e.g. into a base wall (86) of the closure (80)), for reducing noise during flexure of the closure (80) under thermal expansion.

9. A method of assembling a condensing heat exchanger of the kind having a primary heat exchanger and a secondary heat exchanger connected downstream of and in series with the primary heat exchanger, and in which the secondary heat exchanger is arranged to at least partially condense combustion gases discharged from the primary heat exchanger, comprising the steps of:
providing the primary heat exchanger in the form of a drum (62) having a longitudinal axis, and providing the secondary heat exchanger in the form of a plurality of small diameter, relative to the drum diameter, drawn tubes (50) arranged by the side of the drum (62) and extending parallel with the longitudinal axis of the drum (62), and is **characterised in that** a spiral thread (52) is formed as a recessed formation in an outer surface of each drawn tube (50), for promoting flow of combustion gases along the tube (50).

10. A method according to claim 9 including the step of providing an inlet plate (30) and an outlet plate (10) for the tubes (50), the inlet and outlet plates (30, 10) being pre-formed with tube apertures (36) for receiving the ends (54) of the tubes (50) in a pre-defined array, arranging the plates (30, 10) in a spaced array with said tubes (50) arranged between the plates (30, 10) with the tubes (50) in alignment with the tube apertures (36), and forcing the ends (54) of the tubes (50) into the respective tube apertures (36) (e.g. by driving the plates in the direction of one another).

11. A method according to claim 10 wherein each tube aperture (36) is provided with a peripheral flange (38) projecting from the associated plate (30, 10) to provide a sleeve for part of the length of a respective tube, preferably wherein the peripheral flange (38) is swaged to fixedly couple the flange to the tubes (50).

12. A method according to any of claims 9 to 11 wherein a spiral thread (52) is formed in the outer surface of each tube (50) prior to incorporation in the assembly, preferably wherein each tube (50) is drawn and then the spiral thread (52) is formed on the drawn tube (50), prior to a second drawing operation, to remove any significant deformations generated when the thread (52) is formed.

13. A method according to any of claims 9 to 12 wherein: the primary heat exchanger is formed as a subassembly (60) including a cylindrical drum (62) sealingly attached to an outlet plate (64); the secondary heat exchanger is formed as a separate subassembly (40) including said plurality of tubes (50) sealing attached to an inlet plate (30); and the two subassemblies (60, 40) are united with one another by attachment between the outlet plate (64) and inlet plate (30).

14. A method according to claim 13 wherein a closure (80) is attached to the united subassemblies (40, 60) to define a passageway for combustion gases to be channelled from the primary heat exchanger to the secondary heat exchanger.

15. A method according to claim 14 wherein an array of concentric circles (88) is pressed into a surface of the closure (80) to reduce noise during flexure of the closure (80) under thermal expansion, and wherein the closure (80) is of pre-formed box-type configuration having four side walls (84) and a base wall (86), wherein the base wall (86) is pressed outwards, to reduce noise during flexure of the closure (80) under thermal expansion.

## Patentansprüche

1. Kondensationswärmetauscher der Art, die einen primären Wärmetauscher und einen dem primären Wärmetauscher nachgeschalteten und mit diesem in Reihe geschalteten sekundären Wärmetauscher umfasst, wobei der sekundäre Wärmetauscher dafür ausgebildet ist, zumindest teilweise Verbrennungsgase, die von dem primären Wärmetauscher abgeführt werden, zu kondensieren,
wobei der primäre Wärmetauscher eine Trommel (62) mit einer Längsachse umfasst, und wobei der sekundäre Wärmetauscher eine Vielzahl von gezogenen Röhren (50) mit kleinem Durchmesser verglichen mit dem Durchmesser der Trommel aufweist, die seitlich der Trommel (62) angeordnet sind und sich parallel zur Längsachse der Trommel (62) erstrecken, **dadurch gekennzeichnet, dass** in einer Außenseite jeder gezogenen Röhre (50) ein Spiralgewinde (52) als eine vertiefte Struktur ausgebildet ist, um die Strömung von Verbrennungsgasen entlang der Röhre (50) zu begünstigen.

2. Kondensationswärmetauscher nach Anspruch 1, wobei das Spiralgewinde (52) in einem vorbestimmten Abstand von einem Ende (54) der Röhre (50) beginnt und in einem vorbestimmten Abstand von dem entgegengesetzten Ende der Röhre (50) endet, so dass die Enden (54) der Röhre (50) glatt sind, und/oder wobei der Durchmesser der Röhren (50) im Bereich von etwa 4 mm bis 8 mm liegt, und/oder wobei die Röhren (50) eine Röhrenanordnung mit einer ersten und zweiten Reihe von Röhren (50) bilden, wobei die erste und zweite Reihe nebeneinander und parallel zueinander liegen, und wobei die Position der Röhren (50) in der ersten Reihe zu der Position der Röhren (50) in der zweiten Reihe versetzt ist, so dass die Röhren (50) in der ersten Reihe versetzt in Bezug auf die Röhren (50) in der zweiten Reihe angeordnet sind.

3. Kondensationswärmetauscher nach Anspruch 1 oder Anspruch 2, wobei die Röhren (50) zwischen einer Einlass- und einer Auslassplatte (10, 30) vorgesehen sind, als eine Untereinheit des Wärmetauschers.

4. Kondensationswärmetauscher nach Anspruch 3, wobei die Einlass- und/oder Auslassplatte (10, 30) mit Röhrenöffnungen (36) zur Aufnahme der Enden (54) der Röhren (50) in einer vordefinierten Anordnung vorgeformt ist.

5. Kondensationswärmetauscher nach Anspruch 4, wobei jede Röhrenöffnung (36) einen umfänglichen Flansch aufweist, um eine Hülse zur Aufnahme eines Längenabschnitts einer jeweiligen Röhre (50) bereitzustellen.

6. Kondensationswärmetauscher nach einem der Ansprüche 1 bis 5, wobei der primäre Wärmetauscher eine Untereinheit (60) umfasst, welche die zylindrische Trommel (62) beinhaltet, die abdichtend an einer Auslassplatte (64) befestigt ist, wobei der sekundäre Wärmetauscher eine Untereinheit (40) umfasst, welche die Vielzahl von Röhren (50) beinhaltet, die abdichtend an einer Einlassplatte (30) befestigt sind, und wobei die beiden Untereinheiten (60, 40) durch Befestigung der Auslassplatte (64) und der Einlassplatte (30) aneinander zusammengefügt sind.

7. Kondensationswärmetauscher nach Anspruch 6, welcher ferner einen Verschluss (80) umfasst, zum Verbinden der beiden Untereinheiten (60, 40) und zum Bilden eines Durchlasses für Verbrennungsgase, die von dem primären Wärmetauscher zu dem sekundären Wärmetauscher geleitet werden sollen.

8. Kondensationswärmetauscher nach Anspruch 7, wobei der Verschluss (80) einen kastenartigen Aufbau mit vier Seitenwänden (84) und einer Bodenwand (86) aufweist, wobei die Bodenwand (86) durch Pressen derart ausgebildet ist, dass sich eine Außenseite der Bodenwand (86) nach außen erstreckt (z.B. in eine allgemein von den zwei Untereinheiten weg gerichtete Richtung), um Lärm während der Verbiegung des Verschlusses (80) bei thermischer Ausdehnung zu reduzieren, und der ferner eine Anordnung von konzentrischen Kreisen (88) in einer Hauptfläche des Verschlusses (80) eingepresst aufweist (z.B. in einer Bodenwand (86) des Verschlusses (80)), um Lärm während der Verbiegung des Verschlusses (80) bei thermischer Ausdehnung zu reduzieren.

9. Verfahren zum Zusammenbau eines
Kondensationswärmetauscher der Art, die einen primären Wärmetauscher und einen dem primären Wärmetauscher nachgeschalteten und mit diesem in Reihe geschalteten sekundären Wärmetauscher umfasst, und wobei der sekundäre Wärmetauscher dafür ausgebildet ist, zumindest teilweise Verbrennungsgase, die von dem primären Wärmetauscher abgeführt werden, zu kondensieren, mit folgenden Schritten:
Bereitstellen des primären Wärmetauschers in Form einer Trommel (62) mit einer Längsachse, und Bereitstellen des sekundären Wärmetauschers in Form einer Vielzahl von gezogenen Röhren (50) mit kleinem Durchmesser im Vergleich zu dem Durchmesser der Trommel, die seitlich der Trommel (62) angeordnet sind und sich parallel zur Längsachse der Trommel (62) erstrecken, und
**dadurch gekennzeichnet, dass** ein Spiralgewinde (52) als eine vertiefte Struktur in einer Außenseite jeder gezogenen Röhre (50) ausgebildet ist, um die Strömung von Verbrennungsgasen entlang der Röhre (50) zu begünstigen.

10. Verfahren nach Anspruch 9, das den Schritt umfasst, eine Einlassplatte (30) und eine Auslassplatte (10) für die Röhren (50) bereitzustellen, wobei in der Einlass- und der Auslassplatte (30, 10) Röhrenöffnungen (36) zur Aufnahme der Enden (54) der Röhren (50) in einer vordefinierten Anordnung vorgeformt sind, die Platten (30, 10) in einer beabstandeten Anordnung anzuordnen, bei der die Röhren (50) zwischen den Platten (30, 10) angeordnet sind und die Röhren (50) mit den Röhrenöffnungen (36) ausgerichtet sind, und die Enden (54) der Röhren (50) in die jeweiligen Röhrenöffnungen (36) hineinzudrücken (beispielsweise durch Zusammenführen der Platten in Richtung aufeinander).

11. Verfahren nach Anspruch 10, wobei jede Röhrenöffnung (36) einen Umfangsflansch (38) aufweist, der von der zugehörigen Platte (30, 10) vorsteht, um eine Hülse für einen Längenabschnitt einer jeweiligen Röhre bereitzustellen, wobei der Umfangsflansch (38) vorzugsweise gestaucht wird, um den Flansch fest mit den Röhren (50) zu verbinden.

12. Verfahren nach einem der Ansprüche 9 bis 11, wobei vor dem Einbau in die Anordnung in der Außenseite jeder Röhre (50) ein Spiralgewinde (52) ausgebildet wird, wobei vorzugsweise die Röhren (50) jeweils gezogen werden und danach das Spiralgewinde (52) an der gezogenen Röhre (50) ausgebildet wird, vor einem zweiten Ziehvorgang, um etwaige deutliche Verformungen zu entfernen, die beim Ausbilden des Gewindes (52) entstanden sind.

13. Verfahren nach einem der Ansprüche 9 bis 12, wobei: der primäre Wärmetauscher als Untereinheit (60) ausgebildet wird, die eine zylindrische Trommel (62) beinhaltet, die abdichtend an einer Auslassplatte (64) befestigt ist, der sekundäre Wärmetauscher als separate Untereinheit (40) ausgebildet wird, welche die Vielzahl von Röhren (50) beinhaltet, die abdichtend an einer Einlassplatte (30) befestigt sind, und die beiden Untereinheiten (60, 40) durch Befestigung der Auslassplatte (64) und der Einlassplatte (30) aneinander zusammengefügt werden.

14. Verfahren nach Anspruch 13, wobei ein Verschluss (80) an den zusammengefügten Untereinheiten (40, 60) angebracht wird, um einen Durchlass für Verbrennungsgase zu bilden, die von dem primären Wärmetauscher zu dem sekundären Wärmetauscher geleitet werden sollen.

15. Verfahren nach Anspruch 14, wobei eine Anordnung von konzentrischen Kreisen (88) in eine Oberfläche des Verschlusses (80) eingepresst wird, um Lärm während einer Verbiegung des Verschlusses (80) bei thermischer Ausdehnung zu reduzieren, und wobei der Verschluss (80) einen vorgeformten kastenartigen Aufbau mit vier Seitenwänden (84) und einer Bodenwand (86) aufweist, wobei die Bodenwand (86) auswärts gepresst ist, um Lärm während der Verbiegung des Verschlusses (80) bei thermischer Ausdehnung zu reduzieren.

## Revendications

1. Echangeur de chaleur à condensation du type comprenant un échangeur de chaleur primaire et un échangeur de chaleur secondaire branché en aval de l'échangeur de chaleur primaire en série avec celui-ci, dans lequel l'échangeur de chaleur secondaire est réalisé pour condenser au moins partiellement les gaz de combustion sortant de l'échangeur de chaleur primaire,
l'échangeur de chaleur primaire comprenant un tambour (62) ayant un axe longitudinal et l'échangeur de chaleur secondaire comprenant un ensemble de tubes étirés (50) ayant un petit diamètre par rapport au diamètre du tambour, positionnés à proximité du côté du tambour (62) et s'étendant parallèlement à l'axe longitudinal de celui-ci,
**caractérisé en ce qu'**
un filetage spiral (52) est réalisé en retrait dans la surface externe de chaque tube étiré (50) pour favoriser la circulation de gaz de combustion le long du tube (50).

2. Echangeur de chaleur à condensation conforme à la revendication 1, dans lequel le filetage spiral (52) commence à une distance prédéfinie d'une extrémité (54) du tube (50) et s'arrête à une distance prédéfinie de l'extrémité opposée du tube (50), de sorte que les extrémités (54) du tube (50) soient non filetées, et/ou le diamètre des tubes (50) est situé dans la plage d'approximativement 4 mm à 8 mm, et/ou les tubes (50) définissent un motif de tube comprenant une première et une seconde rangées de tubes (50), la première et la seconde rangées étant adjacentes et étant parallèles, et la position des tubes (50) dans la première rangée étant décalée par rapport à la position des tubes (50) dans la seconde rangée de sorte que les tubes (50) de la première rangée soient positionnés en quinconce par rapport aux tubes de la seconde rangée.

3. Echangeur de chaleur à condensation conforme à la revendication 1 ou 2, dans lequel les tubes (50) sont montés entre des plaques d'entrée et de sortie (10, 30), de façon à constituer un sous-ensemble de l'échangeur de chaleur.

4. Echangeur de chaleur à condensation conforme à la revendication 3, dans lequel la plaque d'entrée et/ou la plaque de sortie (10, 30) est préformée avec des ouvertures de tube (36) pour recevoir les extrémités (54) des tubes (50) selon un motif prédéfini.

5. Echangeur de chaleur à condensation conforme à la revendication 4, dans lequel chaque ouverture de tube (36) comprend une bride périphérique permettant d'obtenir un manchon de réception d'une partie de la longueur d'un tube (50) respectif.

6. Echangeur de chaleur à condensation conforme à l'une quelconque des revendications 1 à 5, dans lequel l'échangeur de chaleur primaire comprend un sous-ensemble (60) comprenant le tambour cylindrique (62) fixé de manière étanche à une plaque externe (64), et l'échangeur de chaleur secondaire comprend un sous-ensemble (40) comportant l'ensemble de tubes (50) fixé de manière étanche à une plaque d'entrée (30), et les deux sous-ensembles (60, 40) sont unifiés par jonction entre la plaque externe (64) et la plaque interne (30).

7. Echangeur de chaleur à condensation conforme à la revendication 6, comprenant en outre un élément de fermeture (80) pour relier les deux sous-ensembles (60, 40) et définir un passage pour que les gaz de combustion soient canalisés de l'échangeur de chaleur primaire vers l'échangeur de chaleur secondaire.

8. Echangeur de chaleur à condensation conforme à la revendication 7 ou 2, dans lequel l'élément de fermeture (80) a une configuration en forme de boîte avec quatre parois latérales (84) et une paroi de base (86), la paroi de base (86) a une configuration emboutie à la presse dans laquelle la surface externe de la paroi de base (86) s'étend vers l'extérieur (par exemple en s'écartant essentiellement des deux sous-ensembles), pour réduire les bruits lors de la flexion de l'élément de fermeture (80) sous l'action de la dilatation thermique et comprenant en outre une série de cercles concentriques (88) formés par emboutissage à la presse dans la surface principale de l'élément de fermeture (80) (par exemple dans la paroi de base (86) de l'élément de fermeture (80)) pour réduire les bruits lors de la flexion de l'élément de fermeture (80) sous l'action de la dilatation thermique.

9. Procédé d'assemblage d'un échangeur de chaleur à condensation du type comprenant un échangeur de chaleur primaire et un échangeur de chaleur secondaire branché en aval de l'échangeur de chaleur primaire et en série avec celui-ci, et dans lequel l'échangeur de chaleur secondaire est réalisé pour condenser au moins partiellement les gaz de combustion sortant de l'échangeur de chaleur primaire, comprenant les étapes consistant à :
se procurer l'échangeur de chaleur primaire sous la forme d'un tambour (62) ayant un axe longitudinal et se procurer l'échangeur de chaleur secondaire sous la forme d'un ensemble de tubes étirés (50) ayant un petit diamètre par rapport au diamètre du tambour, positionnés à proximité du côté du tambour (62) et s'étendant parallèlement à l'axe longitudinal de celui-ci,
**caractérisé en ce qu'**
un filetage spiral (52) est réalisé en retrait dans la surface externe de chacun des tubes étirés (50) pour favoriser la circulation des gaz de combustion le long du tube (50).

10. Procédé conforme à la revendication 9, comprenant les étapes consistant à se procurer une plaque d'entrée (30) et une plaque de sortie (10) pour les tubes (50), la plaque d'entrée et la plaque de sortie (30, 10) étant préformées avec des ouvertures de tube (36) pour recevoir les extrémités (54) des tubes (50) selon un motif prédéfini, à positionner les plaques (30, 10) en les écartant selon un motif, les tubes (50) étant positionnés entre les plaques (30, 10), en alignement avec les ouvertures de tube (36) et à introduire à force les extrémités (54) des tubes (50) dans les ouvertures de tubes (36) respectives, (par exemple en déplaçant les plaques dans la direction l'une de l'autre).

11. Procédé conforme à la revendication 10, selon lequel chaque ouverture de tube (36) est équipée d'une bride périphérique (38) faisant saillie sur la plaque associée (30, 10) pour permettre d'obtenir un manchon pour une partie de la longueur d'un tube respectif, la bride périphérique (38) étant de préférence estampée pour accoupler rigidement la bride au tube (50).

12. Procédé conforme à l'une quelconque des revendications 9 à 11, selon lequel un filetage spiral (52) est formé sur la surface externe de chaque tube (50) avant son incorporation dans l'ensemble, et de préférence chaque tube (50) est étiré puis le filetage spiral (52) est formé sur le tube étiré (50) avant une seconde opération d'étirage pour éliminer toute déformation significative créée lors de la formation du filetage (52).

13. Procédé conforme à l'une quelconque des revendications 9 à 12, selon lequel l'échangeur de chaleur primaire est réalisé sous la forme d'un sous-ensemble (60) comprenant un tambour cylindrique (62) fixé de manière étanche à une plaque de sortie (64), l'échangeur de chaleur secondaire est réalisé sous la forme d'un sous-ensemble (40) séparé comprenant l'ensemble de tubes (50) fixé de manière étanche à une plaque d'entrée (30) et les deux sous-ensembles (60, 40) sont unifiés par jonction entre la plaque de sortie (64) et la plaque d'entrée (30).

14. Procédé conforme à la revendication 13, selon lequel un élément de fermeture (80) est fixé au sous-ensemble (40, 60) unifié pour définir un passage pour les gaz de combustion devant être canalisés de l'échangeur de chaleur primaire vers l'échangeur de chaleur secondaire.

15. Procédé conforme à la revendication 14, selon lequel un motif de cercles concentriques (88) est formé par emboutissage à la presse sur une surface de l'élément de fermeture (80) pour réduire les bruits lors de la flexion de l'élément de fermeture (80) sous l'action de la dilatation thermique, et l'élément de fermeture (80) a une configuration de type de boîte préformée ayant quatre parois latérales (84) et une paroi de base (86), la paroi de base (86) étant emboutie à la presse vers l'extérieur pour réduire les bruits lors de la flexion de l'élément de fermeture (80) sous l'action de la dilatation.
